**Europäisches Patentamt**

**European Patent Office**

**Office européen des brevets**

(19)

(11) Numéro de publication: **0 010 052**
**B1**

(12) **FASCICULE DE BREVET EUROPEEN**

(45) Date de publication du fascicule du brevet: **19.10.83**

(51) Int. Cl.³: **A 61 C 9/00**

(21) Numéro de dépôt: **79420045.1**

(22) Date de dépôt: **26.09.79**

(54) **Perfectionnements aux seringues pour l'injection de produits pâteux.**

(30) Priorité: **29.09.78 FR 7828568**

(43) Date de publication de la demande:
**16.04.80 Bulletin 80/8**

(45) Mention de la délivrance du brevet:
**19.10.83 Bulletin 83/42**

(84) Etats contractants désignés:
**BE DE GB IT NL SE**

(56) Documents cités:
**US - A - 1 960 235**
**US - A - 3 417 971**
**US - A - 3 854 209**

(73) Titulaire: **Brugirard, Jean-Louis**
**Le Clos Saint Maurice sur Dargoire**
**F-69440 Mornant (FR)**

(72) Inventeur: **Brugirard, Jean-Louis**
**Le Clos Saint Maurice sur Dargoire**
**F-69440 Mornant (FR)**

(74) Mandataire: **Karmin, Roger**
**Cabinet MONNIER 150, cours Lafayette**
**F-69003 Lyon (FR)**

Courier Press, Leamington Spa, England.

## Perfectionnements aux seringues pour l'injection de produits pâteux

La présente invention est relative à des perfectionnements apportés aux seringues destinées à l'injection de produits pâteux et plus particulièrement de ceux qui se polymérisent en un temps relativement court.

De telles seringues sont utilisées en particulier pour la prise d'empreintes destinées à la fabrication de prothèses dentaires. On utilise souvent un gel pâteux dont la polymérisation s'effectue dans des temps variant de 2 à 3 minutes.

Les seringues connues comportent généralement une aiguille orientée obliquement par rapport à l'axe longitudinal de leur corps, ladite aiguille étant solidaire d'un embout fileté qui se visse dans un bossage oblique de la seringue. Celle-ci est donc constituée par un corps creux allongé duquel il est difficile d'extraire les résidus polymérisés de gel. Ceux-ci qui présentent une dureté comparable à celle d'un caoutchouc dur ne peuvent être éjectés qu'en les poussant au moyen d'une tige traversant l'alésage fileté qui reçoit l'embout de l'aiguille, ce qui est très aléatoire.

D'autre part le remplissage de cette seringue par un gel pâteux est rendu très difficile et long du fait de l'étroitesse du corps de seringue.

Dans les documents US—A—3 417 971 et US—A—3 854 209 il est décrit une seringue pour l'injection de produits pâteux notamment destinée à la réalisation d'empreintes dentaires.

Le premier document concerne une seringue dont l'extrémité du corps comporte un filetage sur lequel se monte une bague d'immobilisation d'un embout coudé par lequel le produit est déversé.

Le second document concerne un montage semblable, le piston de la seringue étant actionné par de l'air comprimé.

Dans ces deux documents le problème du nettoyage de l'embout après polymérisation du produit n'est pas résolu de manière satisfaisante. Les structures des seringues décrites sont en outre fondamentalement différentes de celle de l'article suivant l'invention.

Les perfectionnements qui font l'objet de la présente invention visent à remédier à ces inconvénients et à permettre la réalisation d'une seringue qui réponde mieux que jusqu'à présent aux divers desiderata de la pratique.

Conformément à l'invention on prévoit des moyens permettant l'extraction complète du résidu polymérisé qui apparaît dans une seringue pour l'injection d'un gel pâteux durcissant dans le temps.

Le dessin annexé, donné à titre d'exemple permettra de mieux comprendre l'invention, les caractéristiques qu'elle présente et les avantages qu'elle est susceptible de procurer:

Fig. 1 montre en coupe longitudinale une seringue comportant application des perfectionnements suivant l'invention.

Fig. 2 en est une coupe suivant II—II (fig. 1).

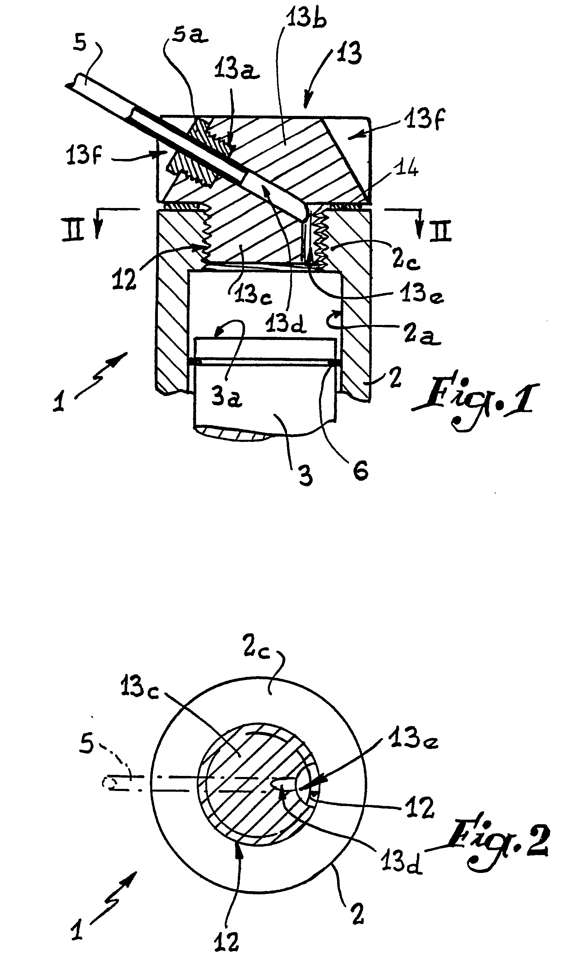

Suivant un mode d'exécution préféré représenté en fig. 1, le corps 2 de la seringue est fermé par une cloison d'extrémité plane référencée 2c et qui est traversée par un trou taraudé 12. L'embout 5a de l'aiguille d'injection 5 est vissé dans un trou taraudé 13a orienté obliquement et ménagé dans la tête 13$_\beta$ d'un bouchon 13 qui comporte un prolongement à plus faible diamètre 13c propre à se visser dans le trou 12. La face inférieure de la tête 13b prend appui à la fin du vissage contre celle externe de la cloison 2c par l'intermédiaire d'un joint d'étanchéi021 14. On observe que l'aiguille 5 fait suite à un canal d'alimentation 13d qui vient déboucher dans une rainure 13e fraisée verticalement dans le prolongement 13c.

Le fonctionnement découle des explications qui précèdent: le gel pâteux qui se trouve à l'avant du piston 3 traverse la rainure 13e pour pénétrer dans le canal 13d puis dans l'aiguille 5 afin qu'il soit déversé sous pression vers l'extérieur par déplacement axial du piston 3. Lorsque celui-ci est à bout de course il n'y a pratiquement pas de résidu si ce n'est celui contenu dans la rainure 13e et dans le canal 13d. L'extraction du produit polymérisé situé dans la rainure s'effectue aisément puisque celle-ci est ouverte vers l'extérieur. Etant donné que le résidu contenu dans la rainure 13e et dans le canal 13d sont d'une seule pièce, l'extraction du produit situé dans celle-ci entraîne celui contenu dans le canal. Quant à l'aiguille elle se nettoie de manière usuelle.

On notera que le bouchon 13 est pourvu de creusures périphériques 13f permettant d'une part la mise en place de l'embout 5a de l'aiguille 5 et d'autre part de constituer des moyens de serrage et de desserrage dudit bouchon.

Bien entendu l'assujettissement de l'aiguille 5 pourrait être exécuté de différentes manièes. On pourrait par exemple supprimer l'écrou ou embout fileté 5a et le remplacer par un manchon tubulaire élastique, l'aiguille métallique 5 s'étendant jusqu'à l'origine du canal 13d. A l'inverse l'aiguille 5 pourrait être constituée par un tube en matière plastique, par exemple en "nylon", le manchon tubulaire étant réalisé en acier.

On pourrait aussi n'utiliser que le tube en matière plastique pour réaliser l'aiguille 5. La partie interne de ce tube s'étendrait alors le long du canal 13d et de la rainure 13e, ledit tube étant immobilisé par sa courbure au niveau de la jonction du canal et de la rainure.

On a ainsi réalisé une seringue pour l'injection de gel pâteux polymérisable dont le nettoyage est particulièrement facile.

Au cas où une partie du résidu resterait entre l'extrémité du piston 3 et la cloison terminale 2c de son corps 2, elle pourrait être facilement éjectée en agissant sur elle à travers le trou 12, par exemple au moyen d'un tige d'un diamètre un peu inférieur à celui dudit trou.

## Revendications

1. Seringue pour l'injection d'un gel pâteux destiné à la prise d'empreintes dentaires dont l'extrémité du corps (2) est associée à un embout propre au maintien d'une aiguille (5) ou tête d'injection orientée obliquement par rapport à l'axe longitudinal du corps (2), caractérisée en ce qu'un bouchon (13) dont un prolongement (13c) se visse dans un taraudage (12) de ladite extrémité du corps (2) constitue un élément intermédiaire entre celui-ci et l'aiguille (5), laquelle est assujettie à un canal (13d) traversant obliquement le bouchon (13) et partant d'une rainure longitudinale (13e) ménagée dans la périphérie du prolongement (13c).

2. Seringue suivant la revendication 1, caractérisée en ce que l'aiguille (5) est assujettie au débouché extérieur du canal oblique (13d) au moyen d'un écrou creux (5a) qui se visse dans le bouchon.

3. Seringue suivant la revendication 1, caractérisée en ce que l'aiguille (5) est coincée dans le canal (13d) au moyen d'un manchon tubulaire.

4. Seringue suivant la revendication 1, caractérisée en ce que l'aiguille (5) est réalisée au moyen d'un tube en matière plastique dont la partie située à l'intérieur de la seringue s'étend sur toute la longueur du canal oblique (13d) et de la rainure longitudinale (13e), étant ainsi immobilisée à la jonction de cette dernière et dudit canal.

5. Seringue suivant la revendication 1, caractérisée en ce que le bouchon (13) comporte des creusures périphériques (13f) facilitant son serrage et son desserrage.

## Patentansprüche

1. Spritze zur Injizierung eines pastösen Gels zwecks Herstellung von Zahnabdrücken, deren Körperende (2) mit einer Ausbauchung verbunden ist, die einen gekrümmten und konischen Injektionskopf hält, dadurch gekennzeichnet, daß ein Verschlußstopfen (13), dessen Verlängerung (13c) in ein Innengewinde (12) des genannten Körperendes (2) eingeschraubt ist, ein Zwischenelement zwischen dem Körper und einer Kanüle (5) bildet, die in einem schrägen Kanal (13d) des Verschlußstopfens befestigt ist, welcher in eine Längsrille (13e) mündet, die in den Umfang der Verlängerung (13c) eingearbeitet ist.

2. Spritze nach Anspruch 1, dadurch gekennzeichnet, daß die Kanüle (5) an der äußeren Mündung des schrägen Kanals (13d) mit Hilfe einer hohlen Schraube (5a) befestigt ist, welche in den Verschlußstopfen eingeschraubt ist.

3. Spritze nach Ansprуche 1, dadurch gekennzeichnet, daß die Kanüle (5) in dem Kanal (13d) mit Hilfe einer rohrförmigen Hülse festgeklemmt ist.

4. Spritze nach Anspruch 1, dadurch gekennzeichnet, daß die Kanüle (5) aus einem Plastikrohr besteht, dessen im Inneren der Spritze gelegener Teil sich über die ganze Länge des schrägen Kanals (13d) und der Längsrille (13e) erstreckt, um an der Verbindungsstelle von letzterer und dem genannten Kanal unbeweglich zu sein.

5. Spritze nach Anspruch 1, dadurch gekennzeichnet, daß der Verschlußstopfen Umfangshohlräume (13f) aufweist, die sein Ein- und Ausschrauben erleichtern.

## Claims

1. Syringe for the injection of a pasty gel intended for the taking of dental impressions, the extremity of the body (2) of which is associated with a ferrule suitable for the holding in position of a curved and conical injection head, characterized in that a cap (13), and extension (13c) of which screws into a threading (12) of the said extremity of the body (2), constitutes an intermediary element between the latter and a cannula (5) fixed to an oblique channel (13d) of the cap which continues from a longitudinal groove (13e) arranged in the periphery of the extension (13c).

2. Syringe according to Claim 1, characterized in that the cannula (5) is fixed to the exterior outlet of the oblique channel (13d) by means of a sunken nut (5a) which screws into the cap.

3. Syringe according to Claim 1, characterized in that the cannula (5) is wedged in the channel (13d) by means of a tubular sleeve.

4. Syringe according to Claim 1, characterized in that the cannula (5) is comprised by means of a tube of plastic material, of which the part situated on the interior of the syringe extends over the entire length of the oblique channel (13d) and of the longitudinal groove (13e), to be fixed in position at the junction of the latter and of the said channel.

5. Syringe according to Claim 1, characterized in that the cap comprises peripheral hollowed-out sections (13f) for facilitating its tightening and untightening.

*Fig.1*

*Fig.2*